# DEMANDE DE BREVET EUROPEEN

(11) **EP 0 908 431 A2**
(43) Date de publication de la demande: **14.04.1999**
(21) Numéro de dépôt: 98117347.9
(22) Date de dépôt: 14.09.1998
(51) Int. Cl.: C05F 17/00, C05F 9/04

(54) **Procédé pour la réduction de la salinité du compost issu de déchets urbains solides, de la fraction organique de ces derniers ou de residus "verts".**

(30) Priorité: 16.09.1997 IT VI970155
(71) Demandeur: S.I.T. Società Igiene Territorio s.r.l., 36040 Brendola (Vicenza) (IT)
(72) Inventeur: Greselin, Michele, 36050 Cartigliano (Vicenza) (IT); Vaccari, Giuseppe, 44100 Ferrara (IT); Dosi, Elisabetta, 44100 Ferrara (IT); Mantovani, Giorgio, 44100 Ferrara (IT)
(74) Mandataire: Bettello, Pietro, Dott. Ing.

(57) **Abrégé**

Un des principaux obstacles qui s'opposent à l'utilisation du compost issu de déchets urbains solides, de la fraction organique de ces derniers, ou de déchets "verts", pour la préparation de terreaux dans le domaine de l'horticulture, de la floriculture et de I'arboriculture est représenté par sa salinité, qui se trouve normalement aux environs de 35-40 meq pour 100 g, alors que 20 serait la valeur limite acceptable. Selon l'invention, pour réduire cette valeur, on utilise le pouvoir d'échange des argiles lavées avec des acides forts ; lesdites argiles sont mélangées au compost et elles capturent les cations responsables de la salinité. La matière ainsi mélangée peut être utilisée comme substitut de la tourbe dans la composition des terreaux.

## Description

La présente invention se rapporte à un procédé apte à permettre la réduction de la salinité du compost issu des déchets urbains solides (désignés dans la suite par le terme de RSU) ou de la fraction organique de ces derniers (désignée dans la suite par le terme de FORSU), ainsi que des résidus dits "verts", constitués par les déchets de fauchage, d'élagage de haies et d'arbres, ainsi que par du bois non traité.

Ainsi qu'il est connu, les déchets urbains solides sont collectés par des entreprises spécialisées dans leur traitement en principe, ils sont envoyés directement à la décharge pour leur élimination.

Du fait de la progression constante de l'occupation par l'homme des territoires affectés autrefois à l'agriculture ou, en tout cas, pas particulièrement urbanisés, il devient de plus en plus difficile de trouver des sites pour lesdites décharges.

En particulier, il est difficile aussi bien de procéder aux expropriations des surfaces affectées à ces décharges, que de vaincre les résistances des personnes qui habitent dans le voisinage de tels sites et qui, même si elles ne sont pas dotées d'une sensibilité particulière à l'environnement, se battent de toutes leurs forces pour chercher à empêcher la création de telles décharges, généralement en se réunissant en comités , et ceci, soit sur le plan légal, en cherchant à démontrer que les décisions prises par les organismes qui ont établi la localisation des sites sont illégitimes et que, de toute façon, ladite localisation n'est pas adéquate soit en faisant pression sur les administrateurs locaux et sur les représentants parlementaires du lieu.

Dans chaque cas, lesdits comités tendent à démontrer qu'il existe sûrement d'autres sites beaucoup plus idoines à ce but, à tel point que, dans les pays anglo-saxons, on parle d'un véritable syndrome de "NIMBY" (never in my back yard = jamais dans ma cour).

De toute façon, même dans le cas où l'on trouve des sites optimaux, convenablement traités, il est évident que les créations de décharges détruisent un précieux territoire qui pourrait être utilisé autrement.

Toutefois, pour réduire la nécessité de réaliser de telles décharges, on a de plus en plus recours à la collecte différenciée des RSU, en séparant les matières qui peuvent être facilement recyclées, comme le verre, le papier et le carton, les métaux et quelques types de matières plastiques.

Ce qui reste des RSU se compose d'une partie dont la mise en décharge ne pose pas de problèmes particuliers (par exemple, le bois, ou les matières inertes en général), mais aussi d'une fraction organique constituée, par exemple, par des résidus alimentaires des habitations, restaurants et cantines aussi bien que par des matières issues du soin des jardins et analogues, comme l'herbe, les branches, les feuilles etc..

Un récent décret ministériel a en particulier défini comme résidus "verts" la partie de fraction organique citée au début qui peut être transformée en compost sans contraintes ni autorisations particulières

La fraction organique a tendance à créer des infiltrations qui sont potentiellement très dangereuses, parce qu'elles sont susceptibles de polluer gravement les couches aquifères.

On a donc cherché à procéder à la collecte différenciée de la FORSU ; en particulier par le traitement de cette dernière, il est possible d'obtenir du compost, en appliquant des procédés qui seront mieux décrits dans la sùite, en donnant naissance à une matière d'aspect fibreux qui peut être utilisée comme amendemènt organique pour les usages agricoles, pour la restauration de zones dégradées, ou bien comme substitut partiel de la tourbe dans la composition des terreaux pour l'horticulture, la floriculture et l'arboriculture.

Cette utilisation est potentiellement une des plus intéressantes, du fait de la grande différence du prix comparativement au produit à remplacer ; toutefois, cette utilisation est extrêmement limitée par le fait que le compost de FORSU présente une salinité, exprimée en meq (milliéquivalents) pour 100 g, trop élevée.

Ce paramétre représente essentiellement la quantité d'ions présents dans la solution.

Normalement, cette valeur est comprise entre 35 et 40, tandis que la valeur acceptable pour remplacer en quantité appréciable les tourbe actuellement utilisées pour les terreaux dans le domaine de l'horticulture, de la floriculture et de l'arboriculture serait de 20.

En effet, une salinité trop élevée empêche l'appareil radical d'absorber les solutions nutritives et provoque un stress hydrique : la résistance est variable et elle constitue de toute façon une caractéristique génétique. Les plantes cultivées dans des buts alimentaires et omementaux possèdent pour la plupart une résistance limitée vis-à-vis d'une salinité trop élevée présente dans le substrat de croissance.

Inversement avec des valeurs de salinité trop basses, les plantes subissent des altérations de leur vitesse de développement, avec pour résultat des taux de production réduits et elles présentent des défauts de conformation et de couleur.

En particulier, de nombreuses entreprises du domaine de l'horticulture, de la floriculture et de l'arboriculture ont cherché à utiliser dans la composition des terreaux le compost issu des RSU ou de la FORSU mais, face à l'impossibilité d'éliminer l'excès de salinité, elles ont abandonné l'utilisation de cette matière, même si elle permettait de réaliser de sensibles économies sur les coûts de production.

Le but de la présente invention est de créer un procédé apte à permettre, avec des modalités simples et des coûts acceptables, la réduction de la salinité du compost issu des RSU, de la FORSU ou de "résidus verts".

Ceci s'obtient, selon l'invention, en prévoyant de mélanger au compost des argiles, préalablement réduites à l'état de poudre, lavées avec une solution concentrée d'un ou de plusieurs acides minéraux forts, puis rincées à l'eau.

Ansi qu'il est connu, les argiles sont un groupe de minéraux appartenant aux fillosilicates, qui possèdent une microstructure cristalline, avec présence de groupes fonctionnels chargés négativement.

Les argiles utilisables sont de différents types, en particulier la bentonite, la vermiculite, la montmorillonite et d'autres encore; elles présentent une capacité d'échange variable et aussi des coûts plutôt variables, fonction des disponibilités présentes selon le moment sur le marché.

Comme on l'a dit plus haut, elles sont réduites à la consistance de la poudre de talc et elles sont lavées avec une solution concentrée d'acides minéraux forts, eux aussi choisis en fonction du prix d'achat et du coût de l'élimination des résidus.

Le lavage avec la solution acide provoque la séparation des cations métalliques adsorbés par les groupes fonctionnels négatifs des argiles et leur remplacement par des ions H⁺.

Etant donné que la fonction de l'acide minéral est limitée au remplacement des cations normalement présents dans les argiles par les hydrogènes, l'unique facteur dont il faut tenir compte est justement leur force c'est-à-dire la constante de dissociation, qui exprime essentiellement la concentration de H⁺ qui caractérise leurs solutions.

Le type de l'acide utilisé n'est pas important en fait, bien qu'on puisse utiliser normalement l'acide chlorhydrique parce qu'on peut le trouver facilement.

Après avoir été soumises au lavage avec la solution acide, les argiles sont rincées avec de l'eau pour éliminer les cations en solution ; ensuite, elles sont mélangées au compost dans un rapport d'environ 1-3 % après la phase de fermentation rapide en tunnel ou en fosse et pendant la période de maturation sur aire avant l'utilisation.

A ce propos, on décrira brièvement ci-après les deux procédés pour la formation de compost qui sont utilisés actuellement, de manière à faire comprendre clairement dans quelle phase de ces procédés se produit le mélange avec les argiles.

Selon le premier procédé, il est prévu que les déchets organiques sont disposés sur aire, où le développement des bactéries élève leur température jusqu'à au moins 55°C.

Ils y restent pendant environ trois semaines.

Dans cette phase, il sont continuellement remélangés pour aérer la masse, ce qui donne aussi lieu à la formation d'infiltrations.

Ensuite, on laisse le compost se reposer en tas pendant environ 3-4 mois, ce qui donne lieu à une seconde fermentation plus tranquille.

A la fin de cette phase, on procède à l'assemblage de la masse du compost avec les argiles.

Au contraire, dans le procédé dit en tunnel, les déchets organiques sont justement introduits dans un tunnel de réaction approprié, dans lesquels on insuffle continuellement de l'air et où la température est contrôlée.

On fait avancer les déchets dans lesdits tunnels pendant environ 3 semaines.

A la fin de cette phase, également dans ce cas, on laisse reposer les déchets en tas, où on les laisse fermenter pendant environ 3-4 mois. A la fin de cette phase ultérieure, on procède à l'assemblage du compost résultant du procédé avec les argiles.

Quel que soit le procédé de production du compost, le mélange des argiles avec ce dernier a pour effet que, sous l'action de la loi de l'équilibre chimique, une partie importante des cations, surtout de sodium, présents dans le compost s'échangent avec les ions H⁺.

De cette manière, on obtient un double effet : d'une part la salinité descend à des niveaux acceptables pour l'utilisation dans le domaine de l'horticulture, de la floriculture et de l'arboriculture.

D'autre part, on obtient aussi la diminution du pH du compost, ce qui en améliore les caractéristiques agronomiques et ne contraint pas d'ajouter d'autres substances à la composition pour le ramener à un niveau plus bas.

De cette façon, le compost ainsi traité pourrait aussi remplacer les tourbes dans la composition des terteaux, lesquels représentent une des rubriques les plus onéreuses dans le bilan des entreprises de ce secteur.

Il faut en outre tenir compte du fait que toutes les tourbes sont d'origine étrangère, ce qui serait aussi positif pour l'équilibre de la balance des paiements de notre pays.

## Revendications

1. Procédé pour la réduction de la salinité du compost issu de déchets urbains solides, de la fraction organique de ces derniers ou des résidus "verts", caractérisé par le fait qu'on prévoit de mélanger au compost des argiles réduites à l'état de poudre, lavées avec une solution concentrée d'un ou de plusieurs acides minéraux forts, puis rincées à l'eau.

2. Procédé, selon la revendication 1, caractérisé par le fait que le mélange des argiles s'effectue à la fin du procédé de production du compost dit en fosse.

3. Procédé selon la revendication 1, caractérisé par le fait que le mélange des argiles s'effectue à la fin du procédé de production du compost dit en tunnel.

4. Procédé, selon la revendication 1, caractérisé par le fait que les argiles sont constituées de bentonite, vermiculite ou de montmorillonite.

5. Procédé selon la revendication 1, caractérisé par le fait qu'on utilise de l'acide chlorhydrique ou sulfurique.

6. Procédé selon la revendication 1, caractérisé par le fait que le rinçage à l'eau provoque l'élimination des cations en solution.

7. Procédé, selon la revendication 1, caractérisé par le fait que les argiles sont mélangées au compost dans un rapport variable de 1 à 3%.

8. Compost à sàlinité réduite, obtenu par application du procédé selon la revendication 1 et/ou selon les autres revendications précédentes.
